# FASCICULE DE BREVET EUROPEEN

(11) **EP 0 794 346 B1**
(45) Date de publication et mention de la délivrance du brevet: **06.12.2000**
(21) Numéro de dépôt: 97400317.0
(22) Date de dépôt: 12.02.1997
(51) Int. Cl.: F16D 3/223

(54) **Joint homocinétique fixe à billes**
Homokinetisches Kugelgelenk
Constant velocity ball joint

(30) Priorité: 04.03.1996 FR 9602692
(43) Date de publication de la demande: 10.09.1997
(73) Titulaire: GKN Automotive AG, 53797 Lohmar (DE)
(72) Inventeur: Guimbretiere, Pierre, 78640 Neauphle-le-Chateau (FR)
(74) Mandataire: Jacobson, Claude

(56) Documents cités:
- DE-A- 2 252 827
- FR-A- 2 655 103
- US-A- 4 861 316
- PATENT ABSTRACTS OF JAPAN vol. 010, no. 114 (M-473), 26 Avril 1986 & JP 60 241521 A (NIPPON SEIKO KK), 30 Novembre 1985,

## Description

La présente invention est relative à un joint homocinétique fixe à billes, du type décrit dans le préambule de la revendication 1.

Dans ce type de joint, le plus représentatif est le joint dit "Rzeppa", dont les gorges, réalisées dans les deux pièces principales, la cloche et la noix, et destinées à recevoir les billes, ont des lignes directrices qui sont sur toute leur longueur des arcs de circonférence; de façon à pouvoir fonctionner à angle de brisure de joint faible, voire nul, les arcs de circonférence ont des centres différents situés sur l'axe des deux pièces principales et décalés symétriquement, pour la cloche et pour la noix, par rapport au centre du joint. Ceci entraîne un croisement permanent des lignes directrices et, par suite, l'existence d'un angle de pilotage de la position des billes, donc de la cage.

Un autre joint connu du type précité, commercialisé par le groupe GKN sous la dénomination "UF", diffère du précédent par le remplacement d'une portion des arcs de circonférence par une autre courbe, en principe une droite parallèle à l'axe de la pièce. Ceci permet l'obtention des gorges des deux pièces principales grâce à des moyens de fabrication modernes tels que l'extrusion à la place de l'usinage (voir par exemple le DE-A-2 252 827). Dans le type UF de base, la cage reste emprisonnée sphériquement et matériellement par la cloche. Dans le joint dit "UFi", au contraire, la cage n'est plus emprisonnée par la cloche, dont l'entrée est cylindrique ; il est donc nécessaire d'ajouter un moyen complémentaire de maintien de la cage, dont le plus simple est constitué par six cales rapportées et soudées dans la cloche.

Tous ces joints à billes présentent les inconvénients suivants :
- les billes ont un déplacement radial important, de l'ordre de l'épaisseur de la cage, lors de la rotation du joint avec angle de brisure élevé. Par suite, les billes viennent en appui sur les arêtes de leurs lumières de guidage sous angle maximal;
- les gorges ont des profondeurs très évolutives sur leur longueur, d'où des risques importants d'éclatements locaux lorsque les billes se trouvent aux emplacements de faible profondeur. Ceci est d'autant plus regrettable que c'est dans ces situations, qui correspondent aux angularités maximales, que les efforts sur les billes sont les plus importants;
- les gorges de la noix "plongent" fortement vers l'axe de celle-ci du côté de l'arbre porte-noix, ce qui limite considérablement la dimension diamétrale des cannelures que l'on peut réaliser dans l'alésage central de la noix;
- le croisement des lignes directrices des gorges des deux pièces principales, nécessaire aux angles de brisure du joint très faibles pour former l'angle de pilotage précité, reste important pour les grands angles de brisure. Ceci introduit une définition fortement surabondante du plan bissecteur, par les six billes, dans ces dernières conditions, avec pour conséquence une baisse du rendement du joint.

L'invention a pour but d'éliminer, ou au moins de réduire de façon importante, les inconvénients ci-dessus.

A cet effet, elle a pour objet un joint homocinétique du type précité, caractérisé par la partie caractérisante de la revendication 1.

Le joint homocinétique suivant l'invention peut comporter une ou plusieurs des caractéristiques des revendications 2 à 13.

Des exemples de réalisation de l'invention vont maintenant être décrits en regard des dessins annexés, sur lesquels :
- la Figure 1 est une demi-vue en coupe méridienne, en position alignée, d'un joint homocinétique conforme à l'invention;
- la Figure 2 est un schéma simplifié du même joint;
- la Figure 3 est une vue en coupe méridienne, en position alignée, d'un autre mode de réalisation du joint homocinétique suivant l'invention;
- les Figures 4 et 5 sont des schémas simplifiés illustrant deux autres modes de réalisation du joint suivant l'invention;
- la Figure 6 est une demi-vue en coupe méridienne, en position de brisure maximale, du joint homocinétique de la Figure 3; et
- la Figure 7 est une demi-vue analogue du joint homocinétique dont dérive le joint de la Figure 6, dans la même position de brisure maximale.

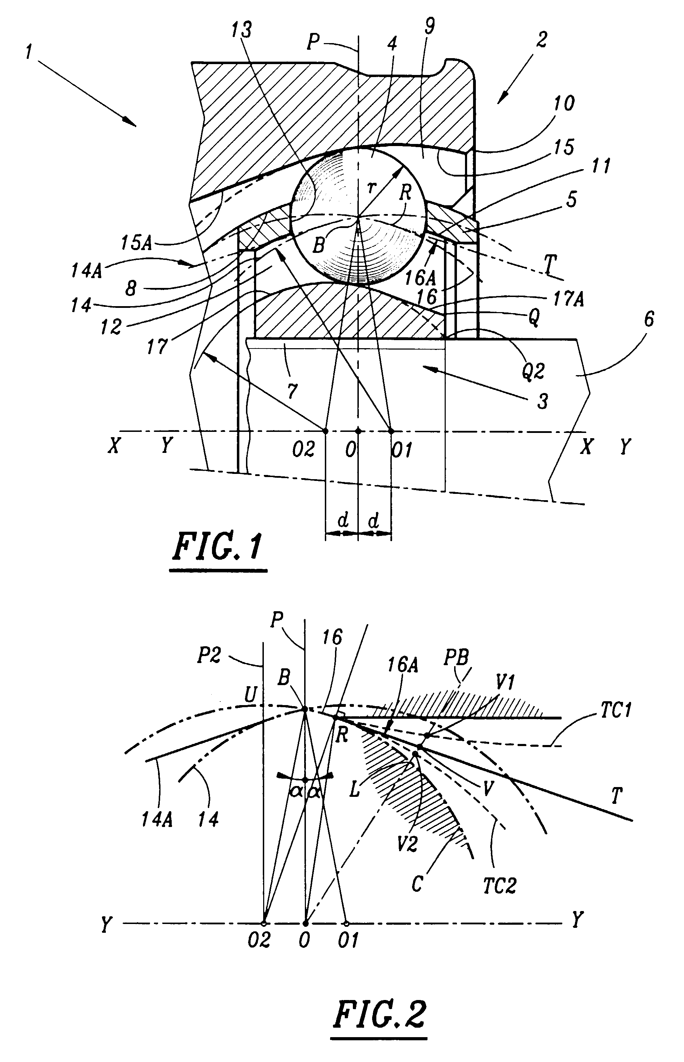

Le joint homocinétique 1 représenté partiellement sur la Figure 1 et schématisé sur la Figure 2 est constitué de deux pièces principales, à savoir une cloche extérieure 2 et une noix intérieure 3, de six billes 4 et d'une cage 5 de maintien des billes dans le plan bissecteur du joint. Lorsque le joint est assemblé, la cloche 2 est solidaire d'un premier arbre (non représenté) d'axe X-X, et la noix 3 est solidaire d'un second arbre 6 d'axe Y-Y. Ces deux axes sont confondus sur les Figures 1 et 2, où le joint est en ligne.

De façon typique, la cloche est venue de matière avec le premier arbre, qui est une fusée de roue motrice, et la noix est fixé sur le second arbre, qui est un arbre moteur, au moyen de cannelures axiales 7 prévues dans son ouverture centrale.

La cloche 2 présente une cavité sphérique 8 de centre O, ouverte vers l'arbre 6, dans laquelle sont réalisées six premières gorges 9, régulièrement réparties angulairement et dont chacune est contenue dans un plan axial de la cloche. Chaque gorge s'étend de part et d'autre du plan diamétral P de la cloche perpendiculaire à l'axe X-X et débouche sur un chanfrein d'entrée 10 de la cloche.

La noix 3 présente une surface extérieure sphérique 11 de centre O dans laquelle sont ménagées six secondes gorges 12 régulièrement réparties angulairement et contenues chacune dans un plan axial la noix. Ces gorges 12 s'étendent de part et d'autre du plan diamétral de la noix qui est confondu avec le plan P lorsque le joint est en ligne, et elles débouchent sur les deux faces d'extrémité de la noix, qui sont parallèles audit plan diamétral.

Les gorges 9 et 12 ont des sections transversales circulaires de même rayon r.

La cage 5 comporte des surfaces sphériques extérieure et intérieure de centre O qui coopèrent respectivement avec les surfaces 8 et 11 précitées. Elle comporte de plus six lumières 13 dans chacune desquelles est guidée une bille 4. Chaque bille a un rayon sensiblement égal à r et coopère avec une paire de gorges 9, 12.

Le joint 1 est dérivé d'un joint "Rzeppa" dans lequel les lignes directrices et le fond des gorges sont définies de la manière suivante.

Pour chaque gorge 9, la ligne directrice 14 est, sur toute sa longueur utile, un arc de cercle dont le centre O1 se trouve sur l'axe X-X, à une distance d du point O du côté de l'entrée de la cloche. Le fond de gorge 15 est par suite l'enveloppe extérieure des cercles centrés sur cet arc et de rayon r.

Pour chaque gorge 12, de même, la ligne directrice 16 est, sur toute la longueur de la noix, un arc d'un cercle C dont le centre O2 se trouve sur l'axe Y-Y, à la même distance d du point O du côté du fond de la cloche. Le fond de gorge 17 est par suite l'enveloppe intérieure des cercles centrés sur cet arc et de rayon r.

Les arcs de cercle 14 et 16, symétriques deux à deux par rapport au plan P, sont indiqués en traits interrompus sur les Figures 1 et 2. Ils se coupent au centre B de la bille et définissent l'angle de pilotage O₂BO₁ = 2α du joint, qui est l'angle formé par les tangentes aux deux arcs au point B.

Le joint suivant l'invention diffère d'un tel joint "Rzeppa" de la manière suivante :

En considérant les gorges 12, l'arc de cercle 16 de centre O₂ s'arrête, du côté de l'entrée de la cloche, en un point R. Puis cet arc de cercle est prolongé, vers l'entrée de la cloche, par la tangente T en R au même cercle. L'arc de cercle 16 et la tangente T forment une courbe 16A, laquelle coupe le plan bissecteur du joint à angularité maximale, référencé PB, en un point repère V. Ce point V est bien entendu, dans le plan PB, à l'extérieur de l'intersection L du cercle C et du plan PB.

Le fond 17A de chaque gorge 12 se déduit de la courbe 16A décrite ci-dessus en traçant l'enveloppe intérieure des cercles de rayon r centrés sur cette courbe.

La ligne directrice 14A et le fond de gorge 15A des gorges 9 de la cloche sont les symétriques, par rapport au plan P, des lignes 16A et 17A décrites ci-dessus, pour satisfaire à la condition d'homocinétie du joint.

Il résulte de ce qui précède :
- que les fonds de gorge 17A, du côté de l'entrée de la cloche, coupent la face d'extrémité de la noix en un point Q qui est situé nettement à l'extérieur, dans la direction radiale, du point Q2 correspondant au joint "Rzeppa". Par conséquent, les cannelures 7 peuvent être de dimension diamétrale nettement accrue, et la zone de fragilité correspondante de la noix est supprimée. Il est à noter que les gorges 12 ont, dans la région du plan PB, une profondeur sensiblement égale à leur profondeur dans le plan P.
- que les gorges 9 ont, du côté du fond de la cloche, une profondeur accrue, ce qui conduit à un contact amélioré entre les billes et ces gorges lorsque le couple est appliqué.

En variante, le segment de droite T peut être remplacé par un autre tronçon de courbe TC1 ou TC2 compris entre le cercle C qui définit l'arc 16 et la parallèle à l'axe Y-Y qui passe par le point R, c'est-àdire entre les deux zones hachurées de la Figure 2 . Le tronçon TC1, TC2 peut être concave ou convexe, comme illustré sur la Figure 2, et il est tangent à la droite T au point R. De plus, de préférence, pour des raisons de commodité de fabrication, la courbe ne possède pas de col par rapport à l'axe Y-Y, c'est-à-dire de point situé à une distance minimale de cet axe.

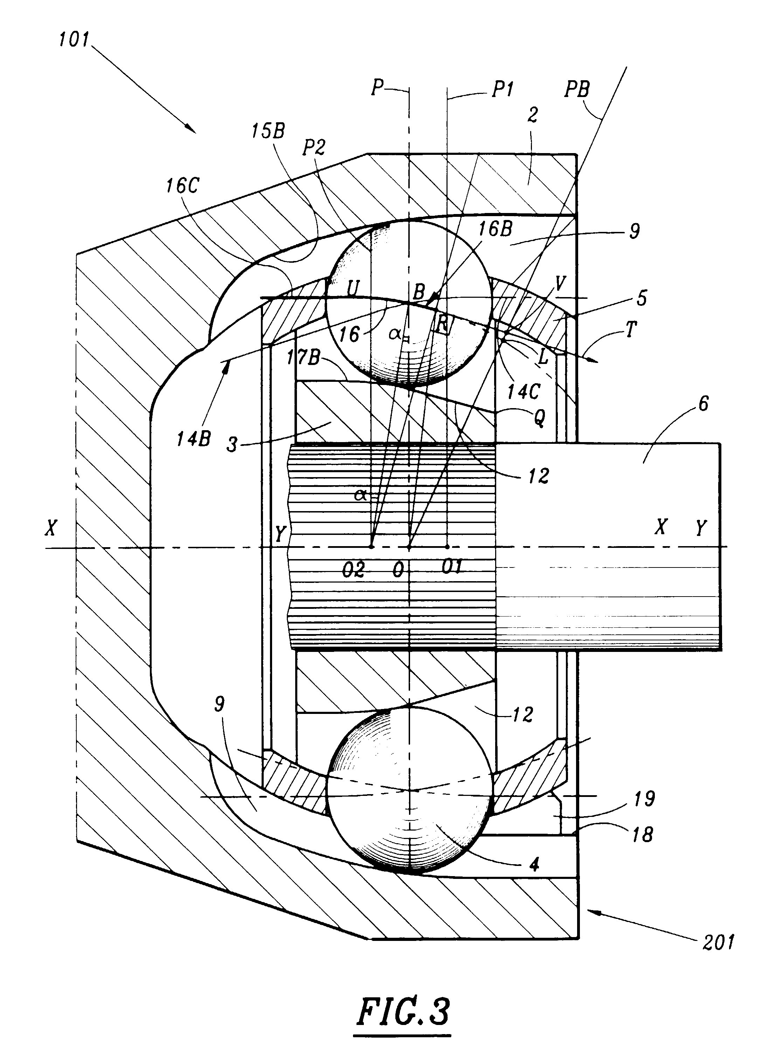

Le joint homocinétique 101 représenté dans la moitié supérieure de la Figure 3 est un joint suivant l'invention dérivé d'un joint "UF" dont il a été question plus haut. Il ne diffère du joint "Rzeppa" modifié des Figures 1 et 2 que par le point suivant : à partir du plan P1 perpendiculaire à l'axe X-X et passant par le point O1, la ligne directrice 14B des gorges 9 de la cloche devient, vers l'entrée de cette dernière, un segment de droite 14C parallèle à l'axe X-X. Par symétrie, à partir du plan P2 perpendiculaire à l'axe Y-Y et passant par O2, la ligne directrice 16B des gorges 12 de la noix devient, vers le fond de la cloche, un segment de droite 16C parallèle à l'axe Y-Y. Les fonds de gorge 15B, 17B sont modifiés de façon correspondante.

Le joint 201 représenté dans la moitié inférieure de la Figure 3 est un joint suivant l'invention dérivé d'un joint "UFi" dont il a été question plus haut. Il ne diffère du précédent que par la présence d'une entrée cylindrique 18, jusqu'au voisinage du plan P, de la cavité de la cloche. La cage est alors maintenue axialement par une série de cales 19 à section à peu près triangulaire, disposées circonférentiellement entre les gorges 9. Cette modification ne change rien à la définition des lignes directrices et des fonds des gorges 9 et 12, qui sont identiques aux courbes 14B à 17B décrites plus haut.

On retrouve dans les joints 101 et 201 les avantages indiqués plus haut, cette fois par rapport au joint UF et UFi dont ils sont dérivés.

La vue schématique de la Figure 4 définit un autre mode de réalisation du joint suivant l'invention. Cette vue est relative à un joint dérivé d'un joint UF ou UFi, mais on comprendra qu'elle peut définir de la même façon un joint suivant l'invention dérivé d'un joint "Rzeppa".

Sur cette Figure 4, qui ne représente que la ligne directrice 16D d'une gorge 12 de la noix, on conserve le point B et l'angle a de la Figure 2. La ligne directrice 16D comprend un arc de cercle 16E centré en un point O₃ situé sur la droite O₂B, au-delà de l'axe Y-Y par rapport au point B. L'arc de cercle ainsi défini s'étend, vers le fond de la cloche, jusqu'au point U tel que O₃U soit parallèle au plan P, puis est prolongé tangentiellement par un segment de droite 16F parallèle à l'axe Y-Y. De l'autre côté, l'arc 16E traverse le plan P, s'étend jusqu'à un point R, puis est prolongé, vers l'entrée de la cloche, par la tangente T au même cercle au point R.

Comme précédemment, la tangente T peut être remplacée par un autre tronçon de courbe compris entre les deux zones hachurées de la Figure 4.

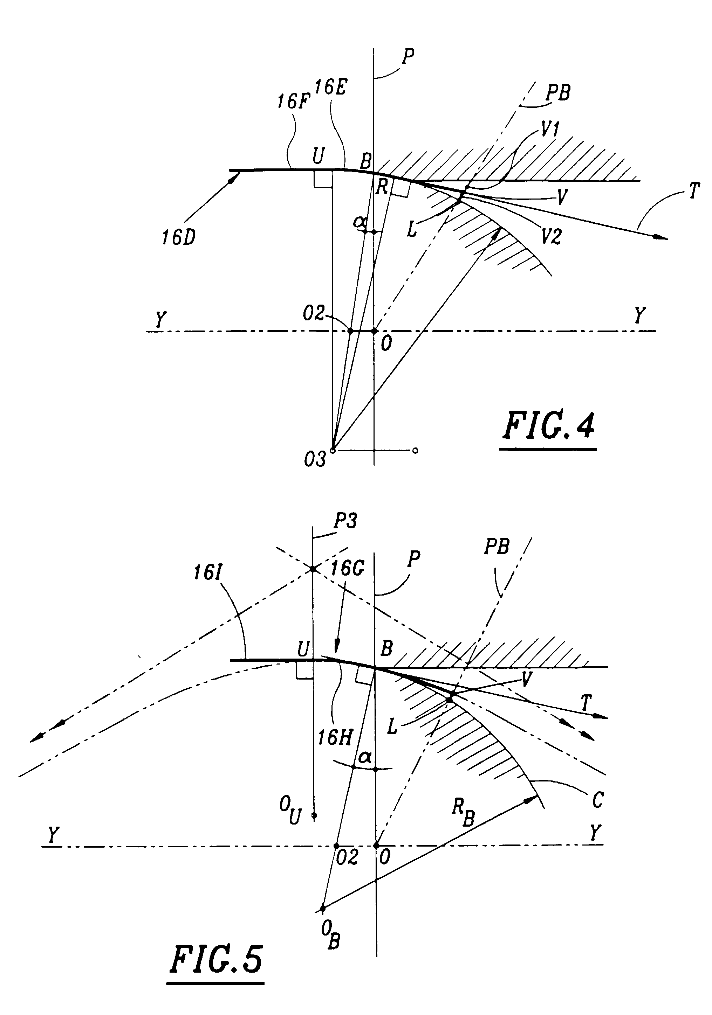

Dans le mode de réalisation de la Figure 5, avec les mêmes éléments U, B et a, la ligne directrice 16G comprend un arc 16H d'une conique, c'est-à-dire d'une courbe du second degré, dont l'axe de symétrie P3 est la parallèle au plan P qui passe par le point U, dont la tangente en B fait l'angle a avec l'axe Y-Y, l'arc passant en outre par un point repère V tel que défini plus haut en regard de la Figure 2. Dans cet exemple, il s'agit d'une hyperbole. L'arc 16H est prolongé tangentiellement vers le fond de la cloche, à partir du point U, par un segment de droite 16I parallèle à Y-Y.

Dans le cas de la Figure 5, la portion d'arc d'hyperbole BV peut être remplacé par un autre tronçon de courbe compris entre les deux zones hachurées délimitées par le cercle C et la parallèle à Y-Y qui passe par le point B, ce tronçon étant comme précédemment tangent en B au cercle C.

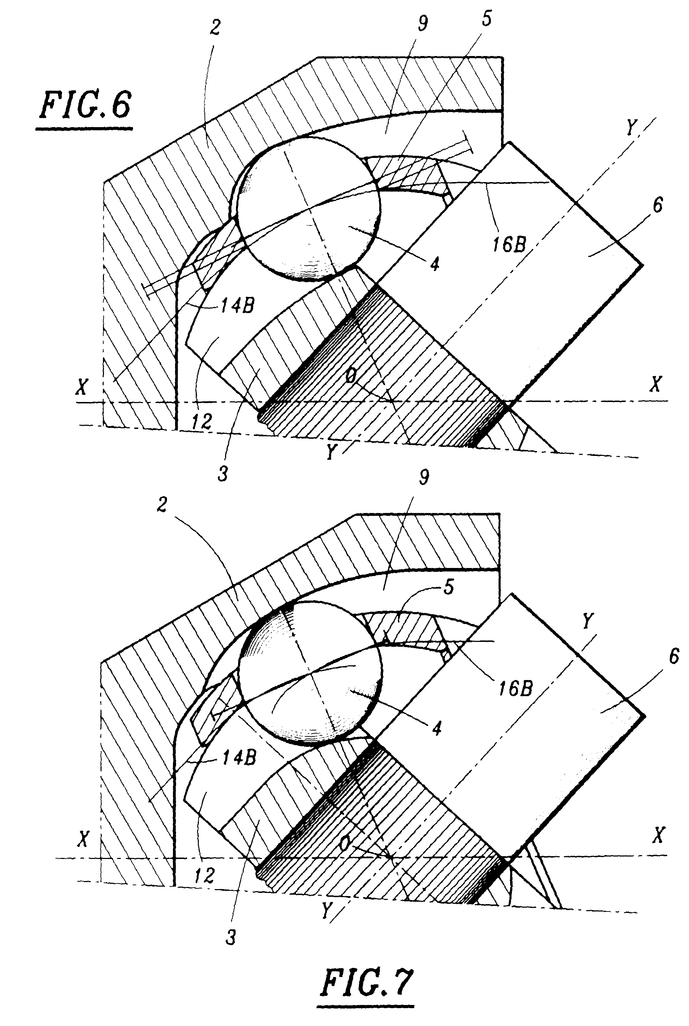

La Figure 6 représente schématiquement le joint 101 de la Figure 3 sous son angle de brisure maximal. On voit, par rapport au joint UF dont il est dérivé, et qui est représenté de la même manière à la Figure 7 :
- que les billes subissent des déplacements radiaux réduits et, toutes choses étant égales par ailleurs, n'atteignent plus les arêtes qui délimitent les fenêtres de guidage 13 de la cage; et
- que les lignes 16B et 14B deviennent quasi-tangentes l'une à l'autre en passant à l'intérieur de l'angle de brisure, dans le plan de brisure, ce qui réduit la surabondance de la définition du plan bissecteur du joint.

## Revendications

1. Joint homocinétique fixe à billes, du type comprenant :
- une cloche (2) destinée à être solidaire d'un premier arbre, la cavité (8) de cette cloche étant au moins partiellement sphérique et comportant six premières gorges (9), la ligne directrice (14A;14B) de chaque première gorge étant contenue dans un plan axial de la cloche;
- une noix destinée à être solidaire d'un second arbre (6), la surface extérieure (11) de cette noix étant au moins partiellement sphérique et munie de six secondes gorges (12), la ligne directrice (16A;16B;16C;16D) de chaque seconde gorge étant contenue dans un plan axial de la noix ;
- six billes (4) reçues, respectivement, partiellement dans les paires desdites premières et secondes gorges; et
- une cage (5) de maintien des billes dans le plan bissecteur du joint lors de la brisure de ce joint, cette cage comportant des surfaces extérieure et intérieure sphériques sensiblement conjuguées, respectivement, des surfaces sphériques (8,11) de la cloche et de la noix, les lignes directrices desdites premières et secondes gorges étant constamment symétriques par rapport au plan bissecteur et comportant chacune, pour lesdites premières gorges (9), un premier arc dont le centre de courbure (O1) est décalé vers l'entrée de la cloche par rapport au centre (O) du joint, et, pour lesdites secondes gorges (12), un second arc dont le centre de courbure (O2) est décalé vers le fond de la cloche par rapport au centre (O) du joint,
**caractérisé en ce que :**
- en considérant, pour chaque seconde gorge (12), (i) un premier point prédéterminé (R; B) de la ligne directrice (16A;16B;16D;16G) espacé, vers l'entrée de la cloche (2), du plan diamétral (P) de la noix (3) perpendiculaire à l'axe (Y-Y) de celle-ci, ou contenu dans ce plan, (ii) la tangente (T) en ce point au cercle (C) centré au centre de courbure correspondant (O2; 03; O_{B}) de ladite ligne directrice, et (iii) un point repère (V) situé radialement à l'extérieur du point (L) dudit cercle qui se trouve dans le plan bissecteur (PB) du joint lorsque le joint est brisé au maximum, alors :
la ligne directrice (16A;16B;16C;16D) est une courbe qui est tangente à ladite tangente (T) audit premier point (R; B) et qui passe par ledit point repère (V).

2. Joint homocinétique suivant la revendication 1, caractérisé en ce que ladite courbe (16A; 16B; 16D; 16G) s'étend, dans les limites de la noix (3), de part et d'autre du plan (P2; P3) parallèle audit plan diamétral (P) et contenant le point (U) de la ligne directrice le plus éloigné de l'axe (Y-Y) de la noix.

3. Joint homocinétique suivant la revendication 1, caractérisé en ce que ledit point repère (V) est choisi de manière à définir, à l'extrémité adjacente de la noix (3), une profondeur de gorge sensiblement égale à la profondeur de gorge dans ledit plan diamétral (P) de la noix.

4. Joint homocinétique suivant l'une quelconque des revendications 1 à 3, caractérisé en ce que ladite courbe (16A;16B;16D) comporte un arc de cercle (16; 16E) qui s'étend de part et d'autre dudit plan diamétral (P), et qui est prolongé vers l'entrée de la cloche par un tronçon de courbe (T, TC1, TC2) situé entre ledit cercle (C) et la parallèle à l'axe (Y-Y) de la noix (3) qui passe par l'extrémité la plus proche (R) de l'arc de cercle.

5. Joint homocinétique suivant la revendication 4, caractérisé en ce que, à partir dudit plan diamétral (P), ledit arc de cercle (16; 16E) s'étend sur une portion (BR) dont l'angle au centre (O₂B, O₂R) permet d'avoir constamment quatre billes (4) au minimum dans les portions des gorges correspondant à ces arcs de cercle lorsque le joint travaille à son angle maximal de brisure.

6. Joint homocinétique suivant la revendication 5, caractérisé en ce que ladite portion d'arc de cercle (BR) s'étend sur un angle au centre (O₂B, O₂R) de l'ordre de 5°.

7. Joint homocinétique suivant l'une quelconque des revendications 4 à 6, caractérisé en ce que ledit tronçon de courbe est la tangente (T) audit arc de cercle (16; 16E) audit premier point (R).

8. Joint homocinétique suivant l'une quelconque des revendications 4 à 7, caractérisé en ce que le centre (O₃) dudit arc de cercle (16E) se trouve au-delà de l'axe (Y-Y) de la noix (3) par rapport audit premier point (R).

9. Joint homocinétique suivant l'une quelconque des revendications 1 à 3, caractérisé en ce que ladite courbe (16G) comprend un arc (16H) d'une conique tangente audit premier point (B) à ladite tangente (T), cet arc passant par ledit point repère (V).

10. Joint homocinétique suivant la revendication 9, caractérisé en ce que ladite conique a un axe de symétrie (P3) perpendiculaire à l'axe (Y-Y) de la noix (3).

11. Joint homocinétique suivant la revendication 10, caractérisé en ce que ladite conique est une hyperbole.

12. Joint homocinétique suivant l'une quelconque des revendications 1 à 7, caractérisé en ce que, à partir d'un point (U) où la tangente à ladite courbe (16A) est parallèle à l'axe (Y-Y) de la noix (3), ladite courbe se prolonge vers le fond de la cloche, dans les limites de la noix, par un arc de cercle centré au centre de courbure correspondant à ce point (U).

13. Joint homocinétique suivant l'une quelconque des revendications 1 à 11, caractérisé en ce que, à partir d'un point (U) où la tangente à ladite courbe (16B;16D;16G) est parallèle à l'axe (Y-Y) de la noix (3), ladite courbe se prolonge par cette tangente vers le fond de la cloche (2), dans les limites de la noix.

## Patentansprüche

1. Feststehendes homokinetisches Kugelgelenk, das folgendes umfaßt:
- eine Glocke (2), die dazu bestimmt ist, mit einer ersten Welle fest verbunden zu sein, und deren Hohlraum (8) mindestens partiell sphärisch ist und sechs erste Nuten (9) aufweist, wobei die Leitlinie (14A; 14B) jeder ersten Nut in einer axialen Ebene der Glocke liegt,
- einen Kern, der dazu bestimmt ist, mit einer zweiten Welle (6) fest verbunden zu sein, und dessen Außenfläche (11) mindestens partiell sphärisch ist und mit sechs zweiten Nuten (12) versehen ist, wobei die Leitlinie (16A; 16B; 16C; 16D) jeder zweiten Nut in einer axialen Ebene des Kerns liegt,
- sechs Kugeln (4), die von den Paaren der ersten und zweiten Nuten jeweils partiell aufgenommen werden, und
- einen Käfig (5), der die Kugeln bei der Abwinkelung des Gelenks in der winkelhalbierenden Ebene des Gelenks hält und eine sphärische Außenfläche und eine sphärische Innenfläche aufweist, die der sphärischen Fläche (8, 11) der Glocke bzw. des Kerns im wesentlichen zugeordnet sind, wobei die Leitlinien der ersten und zweiten Nuten ständig bezüglich der winkelhalbierenden Ebene symmetrisch sind und bei den ersten Nuten (9) jeweils einen ersten Kreisbogen, dessen Krümmungsmittelpunkt (01) bezüglich des Mittelpunkts (O) des Gelenks auf den Eingang der Glocke zu versetzt ist, und bei den zweiten Nuten (12) einen zweiten Kreisbogen aufweisen, dessen Krümmungsmittelpunkt (02) bezüglich des Mittelpunkts (O) des Gelenks auf den Boden der Glocke zu versetzt ist, dadurch gekennzeichnet, dass wenn man bei jeder zweiten Nut (12) folgendes betrachtet:
i) einen ersten vorbestimmten Punkt (R; B) der Leitlinie (16A; 16B; 16D; 16G), der von der zur Achse (Y-Y) des Kerns (3) senkrechten diametralen Ebene (P) des Kerns (3) auf den Eingang der Glocke (2) zu entfernt ist oder der in dieser Ebene liegt,
ii) die Tangente (T) in diesem Punkt zu dem Kreis (C), dessen Mittelpunkt im entsprechenden Krümmungsmittelpunkt (02; 03; O_{B}) dieser Leitlinie liegt, und
iii) einen Bezugspunkt (V), der radial außerhalb von dem Punkt (L) dieses Kreises gelegen ist, der sich in der winkelhalbierenden Ebene (PB) des Gelenks befindet, wenn das Gelenk maximal abgewinkelt ist,
die Leitlinie (16A; 16B; 16C; 16D) eine Kurve ist, die diese Tangente (T) im ersten Punkt (R; B) tangiert und durch den Bezugspunkt (V) läuft.

2. Homokinetisches Gelenk nach Anspruch 1, dadurch gekennzeichnet, dass die Kurve (16A; 16B; 16D; 16G) sich innerhalb der Grenzen des Kerns (3) zu beiden Seiten der zu der diametralen Ebene (P) parallelen Ebene (P2; P3) erstreckt, in der der von der Achse (Y-Y) des Kerns am weitesten entfernte Punkt (U) der Leitlinie liegt.

3. Homokinetisches Gelenk nach Anspruch 1, dadurch gekennzeichnet, dass der Bezugspunkt (V) so gewählt ist, dass am benachbarten Ende des Kerns (3) eine Nuttiefe definiert wird, die im wesentlichen gleich der Nuttiefe in der diametralen Ebene (P) des Kerns ist.

4. Homokinetisches Gelenk nach einem der Ansprüche 1 bis 3, dadurch gekennzeichnet, dass die Kurve (16A; 16B; 16D) einen Kreisbogen (16; 16E) umfasst, der sich zu beiden Seiten der diametralen Ebene (P) erstreckt und auf den Eingang der Glocke zu durch ein Kurventeilstück (T, TC1, TC2) verlängert ist, das zwischen dem Kreis (C) und der zur Achse (Y-Y) des Kerns (3) parallelen Geraden gelegen ist, die durch das am nächsten gelegene Ende (R) des Kreisbogens läuft.

5. Homokinetisches Gelenk nach Anspruch 4, dadurch gekennzeichnet, dass sich der Kreisbogen (16; 16E) von der diametralen Ebene (P) an auf einem Teilstück (BR) erstreckt, dessen Zentriwinkel (O₂B, O₂R) es gestattet, ständig mindestens vier Kugeln (4) in den diesen Kreisbögen entsprechenden Teilstücken der Nuten zu haben, wenn das Gelenk unter maximaler Abwinklung arbeitet.

6. Homokinetisches Gelenk nach Anspruch 5, dadurch gekennzeichnet, dass sich das Kreisbogenteilstück (BR) über einen Zentriwinkel (O₂B, O₂R) von etwa 5° erstreckt.

7. Homokinetisches Gelenk nach einem der Ansprüche 4 bis 6, dadurch gekennzeichnet, dass dieses Kurventeilstück die Tangente (T) zum Kreisbogen (16; 16E) im ersten Punkt (R) ist.

8. Homokinetisches Gelenk nach einem der Ansprüche 4 bis 7, dadurch gekennzeichnet, dass der Mittelpunkt (O₃) des Kreisbogens (16E) sich bezüglich des ersten Punkts (R) jenseits der Achse (Y-Y) des Kerns (3) befindet.

9. Homokinetisches Gelenk nach einem der Ansprüche 1 bis 3, dadurch gekennzeichnet, dass die Kurve (16G) einen Bogen (16H) eines Kegelschnitts umfaßt, der die Tangente (T) im ersten Punkt (B) tangiert, wobei dieser Bogen durch den Bezugspunkt (V) läuft.

10. Homokinetisches Gelenk nach Anspruch 9, dadurch gekennzeichnet, dass dieser Kegelschnitt eine zur Achse (Y-Y) des Kerns (3) senkrechte Symmetrieachse (P3) besitzt.

11. Homokinetisches Gelenk nach Anspruch 10, dadurch gekennzeichnet, dass der Kegelschnitt eine Hyperbel ist.

12. Homokinetisches Gelenk nach einem der Ansprüche 1 bis 7, dadurch gekennzeichnet, dass die Kurve von einem Punkt (U) an, in dem die Tangente zur Kurve (16A) zur Achse (Y-Y) des Kerns (3) parallel ist, innerhalb der Grenzen des Kerns auf den Boden der Glocke zu durch einen Kreisbogen verlängert ist, dessen Mittelpunkt in dem diesem Punkt (U) entsprechenden Krümmunsmittelpunkt liegt.

13. Homokinetisches Gelenk nach einem der Ansprüche 1 bis 11, dadurch gekennzeichnet, dass die Kurve von einem Punkt (U) an, an dem die Tangente zur Kurve (16B; 16D; 16G) zur Achse (Y-Y) des Kerns (3) parallel ist, innerhalb der Grenzen des Kerns auf den Boden der Glocke (2) zu durch diese Tangente verlängert ist.

## Claims

1. Fixed ball-type homokinetic joint, of the type comprising :
a bell (2) for connection to a first shaft, the cavity (8) of this bell being at least partly spherical and having six first grooves (9), the directrix line (14A ; 14B) of each first groove being contained in an axial plane of the bell ;
a hub for connection to a second shaft (6), the outer surface (11) of this hub being at least partly spherical and having six second grooves (12), the directrix line (16A ; 16B ; 16C ; 16D) of each second groove being contained in an axial plane of the hub ;
six balls (4) respectively and partly received in the pairs of said first and second grooves; and
a cage (5) for retaining the balls (4) in the bisecting plane (PB) of the joint when this joint is flexed, this cage comprising spherical outer an inner surfaces respectively substantially conjugate to the spherical surfaces (8, 11) of the bell and of the hub, the directrix lines of said first and second grooves being constantly symmetric relative to said bisecting plane and each comprising, for said first grooves (9), a first arc whose center of curvature (10) is offset toward the entrance end of the bell relative to the center (0) of the joint and, for said second grooves (12), a second arc whose center of curvature (02) is offset toward the inner end of the bell relative to the center (0) of the joint,
characterized in that :
in considering, for each second groove (12), (i) a predetermined first point (R; B) of the directrix line (16A; 16B; 16D; 16G) spaced from the diametral plane (P) of the hub perpendicular to the axis of the hub, toward the entrance end of the bell, or contained in this diametral plane, (ii) the tangent (T), at this point, to the circle (C) centered on the corresponding center of curvature (02; 03; OB) of said directrix line, and (iii) a reference point (V) positioned radially outside the point (L) of said circle which is positioned in said bisecting plane (PB) of the joint when the joint is flexed at a maximum angle, then :
the directrix line (16A; 16B; 16C; 16D) is a curve which is tangent to said tangent (T) at said first point (R; B) and passes through said reference point (V).

2. Homokinetic joint according to claim 1, characterized in that said curve (16A; 16B; 16D; 16G) extends, within the limits of the hub (3), on either side of the plane (P2; P3) parallel to said diametral plane (P) and containing the point (U) of the directrix line the most remote from the axis (Y-Y) of the hub.

3. Homokinetic joint according to claim 1, characterized in that said reference point (V) is so chosen as to define, at the adjacent end of the hub (3), a groove depth substantially equal to the groove depth in said diametral plane (P) of the hub.

4. Homokinetic joint according to any one of claims 1 to 3, characterized in that said curve (16A; 16B; 16D) comprises an arc of a circle (16; 16E) which extends on either side of said diametral plane (P) and is extended toward the entrance end of the bell by a curve segment (T, TC1, TC2) positioned between said circle (C) and the line parallel to the axis (Y-Y) of the hub which passes through the closest end (R) of the arc of a circle.

5. Homokinetic joint according to claim 4, characterized in that said arc of a circle (16; 16E) extends from said diametral plane (P) in a portion (BR) subtending an angle at the center (02B, 02R) which permits having constantly a minimum of four balls (4) in portions of the grooves corresponding to these arcs of a circle when said joint operates at its maximum flexing angle.

6. Homokinetic joint according to claim 5, characterized in that said portion of said arc of a circle (BR) subtends an angle at the center (02B, 02R) of substantially 5°.

7. Homokinetic joint according to any one of claims 4 to 6, characterized in that said curve segment is the tangent (T) to said arc of a circle (16; 16E) at said first point (R).

8. Homokinetic joint according to any one of claims 4 to 7, characterized in that the center (03) of said arc of a circle (16E) is positioned beyond the axis (Y-Y) of the hub (3) relative to said first point (R).

9. Homokinetic joint according to any one of claims 1 to 3, characterized in that said curve (16G) comprises an arc (16H) of a conic which is tangent at said first point (B) to said tangent (T), said arc passing through said reference point (V).

10. Homokinetic joint according to claim 9, characterized in that said conic has an axis of symmetry (P3) perpendicular to the axis (X-X) of the hub (3).

11. Homokinetic joint according to claim 10, characterized in that said conic is a hyperbola.

12. Homokinetic joint according to any one of claims 1 to 7, characterized in that said curve is extended toward the inner end of the bell beyond a point (U) where the tangent to said curve (16A) is parallel to the axis (Y-Y) of the hub (3), within the limits of the hub, by an arc of a circle centered on the center of curvature corresponding to this point (U) .

13. Homokinetic joint according to any one of claims 1 to 11, characterized in that, beyond a point (U) where the tangent to said curve (16B; 16; 16G) is parallel to the axis (Y-Y) of the hub (3), said curve is extended by this tangent toward the inner end of the bell, within the limits of the hub.
